# EUROPÄISCHE PATENTSCHRIFT

(11) **EP 1 538 708 B1**
(45) Veröffentlichungstag und Bekanntmachung des Hinweises auf die Patenterteilung: **18.02.2009**
(21) Anmeldenummer: 04028628.8
(22) Anmeldetag: 02.12.2004
(51) Int. Cl.: H01R 13/00

(54) **Ladesteckverbindersatz mit Adapter**
Connecting assembly with adapter
Dispositif de connection avec adaptateur

(30) Priorität: 02.12.2003 DE 20318583 U
(43) Veröffentlichungstag der Anmeldung: 08.06.2005
(73) Patentinhaber: Schaltbau GmbH, 81677 München (DE)
(72) Erfinder: Fraczek, Jerzy, 81827 München (DE)
(74) Vertreter: Grünecker, Kinkeldey, Stockmair & Schwanhäusser Anwaltssozietät

(56) Entgegenhaltungen:
- EP-A- 1 014 510

## Beschreibung

Die Erfindung betrifft einen Ladesteckverbindersatz mit einem ein Gehäuse aufweisenden Stecker und einer ein Dosengehäuse aufweisenden Dose zum Übertragen von elektrischen Strömen und Fluiden etwa für einen Gabelstapler, wobei wechselseitig zueinander passend an dem Stecker, der Dose zugewandt und an der Dose, dem Stecker zugewandt, je ein Steckadapter oder ein Aufnahmeadapter in Längsrichtung von Stecker und Dose einsetzbar und lösbar vorgesehen ist, wobei in dem Adapter jeweils ein Fluidhauptkanal und in diesen mündende Fluidzweigkanäle derart verlaufen, dass die an der Außenseite des Steckadapters befindlichen Enden der Fluidzweigkanäle als hohle Steckvorsprünge ausgestaltet sind, die in die Fluidzweigkanäle des Aufnahmeadapters unter Herstellung einer fluiddichten Verbindung im eingesteckten Zustand von Stecker und Dose eingesteckt sind und dass die Mittelachsen durch die Außenkonturen der Steckvorsprünge parallel zueinander verlaufen.

Aus dem Stand der Technik, etwa der europäischen Druckschrift EP 0 821 444 B1 ist ein Ladesteckverbindersatz bekannt. Dieser dort offenbarte Ladesteckverbindersatz weist ein Steckergehäuse und ein Dosengehäuse auf. Das Steckergehäuse wird in das Dosengehäuse eingesteckt. Das Dosengehäuse weist eine Schürze auf, welche zwei Stiftkontakte beherbergt. Das Steckergehäuse weist einen Steckvorsprung auf. Der Steckvorsprung weist zwei zueinander parallele Stiftkontaktaufnahmeausnehmungen auf. Im zusammengesteckten Zustand von Stecker und Dose stecken die Stiftkontakte in den Stiftkontaktaufnahmeausnehmungen und der Steckvorsprung in der Schürze der Dose. Zwischen den beiden Stiftkontakten und den Stiftkontaktaufnahmeausnehmungen sind sowohl in der Dose als auch in dem Stecker jeweils ein Codierstift parallel zur Längsachse von Stecker und Dose angebracht. In dem Stecker, insbesondere im Steckvorsprung ist eine Codierstiftaufnahmeausnehmung im zusammengebauten Zustand von Dosengehäuse und Steckgehäuse eingebracht. Diese Codierstiftaufnahmeausnehmung nimmt einen Codierstift auf. Auf der Dosenseite ist ein Codierstift befestigt. Dieser Codierstift ist derart ausgestaltet, dass er im zusammengesteckten Zustand in die Codierstiftaufnahmeausnehmung des Steckers passt. Durch zueinander differierenden Einbau der Codierstifte in Dose oder Stecker wird verhindert, dass Stecker oder Dose zusammenpassen. Dadurch ist gewährleistet, dass der ihm entsprechende Stecker zur ihm entsprechenden Dose einsteckbar ist. Durch Ladesteckverbinderbausätze der entsprechenden Gattung der Erfindung, werden hohe Ströme geleitet. Diese Ströme werden zum Laden von Batterien an Gabelstaplern eingesetzt. Zusätzlich gibt es bei Ladesteckverbindem der erfindungsgemäßen Gattung weitere zusammenpassende Öffnungen in Stecker und Dose, in denen entweder Pilotkontakte oder aber Fluide geführt werden können.

Zu diesem Zweck ist es vorgesehen, Adapter in den Stecker und die Dose einzusetzen. Die Adapter sind in Längsrichtung von Stecker und Dose einsetzbar und lösbar vorgesehen.

Die zwei Adapter sind dosen- und steckerseitig unterschiedlich ausgestaltet. Einer der zwei Adapter ist als Steckeradapter ausgeführt. Dieser Steckadapter weist zwei Deckvorsprünge auf, in denen zwei Fluidzweigkanäle verlaufen. Diese Fluidzweigkanäle münden in einem gemeinsamen Fluidhauptkanal des Adapters. Der Fluidhauptkanal des Steckadapters endet ebenso in einem Steckansatz. Dieser Steckansatz ist hohl, so dass Fluide von dem einen Ende des Steckadapters zu dem anderen Ende des Steckadapters gelangen. Der dazu passende Aufnahmeadapter der in dem anderen Bauteil von Stecker oder Dose eingebaut ist, nimmt in dem zusammengesteckten Zustand von Stecker und Dose die Steckvorsprünge des Steckadapters, in denen die Fluidzweikanäle verlaufen, auf. Eine fluiddichte Verbindung in Form einer Kupplung wird somit im eingesteckten Zustand von dem Stecker in der Dose hergestellt.

Im Stand der Technik werden solche Adapter blasgeformt. Dabei verlaufen die Fluidzweigkanäle parallel zum Fluidhauptkanal. Die Folge ist eine sehr ungünstige Strömungsverteilung innerhalb der Adapter.

Es ist somit Aufgabe der vorliegenden Erfindung einen Ladesteckverbindersatz mit Adaptern der Allgemeinheit zur Verfügung zu stellen, der einen strömungsmechanisch günstigeren Verlauf innerhalb des Adapters hat. Auch soll ein solches Produkt kostengünstiger herzustellen sein.

Eine gattungsgemäße Erfindung erreicht dies dadurch, dass die steckadapterseitigen Mittelachsen der Fluidzweigkanäle sich mit der Mittelachse des Fluidhauptkanals schneiden.

Auf diese Art und Weise ist sichergestellt, dass die Fluidzweigkanäle auf den Fluidhauptkanal zulaufen und sich keine scharfen Ecken und Kanten innerhalb des Fluidkanalverlaufs ergeben. Strömungsablösung innerhalb des Fluidkanals, sowohl im Fluidhauptkanal als auch in den Fluidzweigkanälen ist somit verhindert. Zusätzlich lässt sich ein solcher Adapter kostengünstiger realisieren als traditionell geformte Fluidzweigkanäle, welche parallel zu einem Fluidhauptkanal verlaufen.

Im Folgenden werden besonders vorteilhafte Ausführungsformen anhand von Unteransprüchen näher erläutert.

Besonders vorteilhaft ist es, wenn sich in einer Variante die Mittelachsen der Fluidzweigkanäle in einem Punkt auf der Mittelachse des Fluidhauptkanals schneiden. Dadurch ist gewährleistet, dass die zusammenströmenden Fluide aus den Fluidzweigkanälen sich im Sinne einer Vektoraddition direkt in den Fluidhauptkanal bewegen. Große Strömungswiderstände werden dabei vermieden.

Kosten lassen sich besonders dann sparen, wenn zumindest einer der Adapter spritzgusstechnisch hergestellt ist. Kunststoffspritzgussteile sind im Regelfall günstiger als Kunststoffblasteile. Die Adapter, das Steckgehäuse und das Dosengehäuse sind beide aus Kunststoff hergestellt. Dies ist ein kostengünstiges, elektrisch nichtleitendes und damit sicheres Material in Verbindung eines Ladesteckverbindersatzes, zum Vermeiden von Stromschlägen.

Es ist von besonderem Vorteil wenn in einer Variante die Mittelachsen der Fluidzweigkanäle um 45° bis 5° zueinander versetzt sind, da sich dann keine turbulenten Strömungen in den Fluidkanälen ergeben. Ein besonders optimaler Wert für den Versatz der Mittelachsen der Fluidzweigkanäle ist ein Winkel von 15°.

Damit der Fluidhauptkanal in weiterführende Kanäle eingesteckt werden kann, ist es von großem Vorteil, wenn der Fluidhauptkanal in einem Steckansatz endet.

Weitergehende Strömungsobstruktionen werden dadurch verhindert, dass der Fluidhauptkanal einen größeren Durchmesser als einer der Fluidzweigkanäle aufweist.

Wenn die Durchmesser der Fluidzweigkanäle gleich groß sind, so ist eine Fluidverteilung in den Fluidzweigkanälen ungefähr gleich groß. Die in dem Fluidhauptkanal dann zusammentreffenden Fluidmengen sind ebenso ungefähr gleich groß und verteilen sich dann ungefähr gleich in dem Fluidhauptkanal, was zur Folge hat, dass der Fluidablauf durch den Fluidhautpkanal besonders gut ist.

Wenn zu mindestens einer der Steckvorsprünge radiale Rückhaltevorsprünge aufweist, so ist in dieser Variante ein Herausrutschen der Steckvorsprünge aus den Fluidzweigkanälen des Aufnahmeadapters oder des Fluidhauptkanales aus weiterführenden Fluidkanälen besser verhindert.

Um eine fluiddichte Kupplung zwischen dem Steckadapter und dem Aufnahmeadapter zu erhalten ist es von besonderem Vorteil in einer Variante, wenn zu mindestens einer der Steckvorsprünge, vorzugsweise die beiden Steckvorsprünge in dem oder in denen die Fluidzweigkanäle enden, radiale Nuten zur Aufnahme von Dichtringen aufweisen.

Fertigungstechnisch lässt sich ein Steckadapter oder ein Aufnahmeadapter besonders gut dadurch realisieren, wenn die Adapter zu einer Ebene durch die Längsachse des Adapters symmetrisch aufgebaut sind.

Wenn der Adapter eine axial abstehende Befestigungslasche aufweist, so lässt sich besonders gut in dieser Variante der Adapter in dem Steckgehäuse oder in dem Dosengehäuse befestigen.

Im Folgenden werden Ausführungsbeispiele der vorliegenden Erfindung anhand einer Zeichnung näher erläutert. Es zeigen:
- Figur 1: eine Dose mit Dosengehäuse in perspektivischer Ansicht des erfindungsgemäßen Ladesteckverbindersatzes,
- Figur 2: eine perspektivische Ansicht des Steckergehäuse von unten mit Blick auf die Stiftkontaktaufnahmeausnehmungen und die Codierstiftaufnahme mit darin integriertem Codierstift und unterhalb davon befindlichem Aufnahmeadapter,
- Figur 3: eine perspektivische Ansicht von oben auf das zusammengesteckte Steckergehäuse und das Dosengehäuse aus den Figuren 1 und 2,
- Figur 4: einen Aufnahmeadapter in perspektivischer Ansicht von oben,
- Figur 5: einen Aufnahmeadapter in perspektivischer Ansicht von unten, wie aus Figur 4 bekannt,
- Figur 6: eine Ansicht von oben auf einen Aufnahmeadapter aus Figur 4 und Figur 5,
- Figur 7: eine Seitenansicht des Aufnahmeadapters aus den Figuren 4 bis 6,
- Figur 8: einen Schnitt durch den Aufnahmeadapter aus den Figuren 4 bis 7 entlang einer Linie VIII aus Figur 6,
- Figur 9: eine Schnittansicht durch den Aufnahmeadapter aus den Figuren 4 bis 8 entlang der Linie VIII aus Figur 7,
- Figur 10: eine Seitenansicht von außen auf den Fluidhauptkanal des Aufnahmeadapters aus den Figuren 4 bis 9,
- Figur 11: eine Frontansicht auf die Fluidzweigkanäle des Aufnahmeadapters aus den Figuren 4 bis 10,
- Figur 12: eine perspektivische Ansicht von oben auf einen Steckeradapter,
- Figur 13: eine perspektivische Ansicht von unten auf einen Steckeradapter aus Figur 12,
- Figur 14: eine Ansicht von oben auf einen Steckeradapter entsprechend der Figuren 12 und 13,
- Figur 15: eine Seitenansicht des Steckeradapters aus den Figuren 12 bis 14,
- Figur 16: eine Schnittdarstellung des Steckeradapters aus den Figuren 13 bis 15 entlang einer Linie 16 aus Figur 15,
- Figur 17: eine Frontansicht auf die Fluidzweigkanäle des Steckeradapters aus den Figuren 13 bis 16,
- Figur 18: eine Frontalansicht des Steckeradapters aus den Figuren 13 bis 17 von der Fluidhauptkanalseite,
- Figur 19: das Detail eines Steckvorsprunges des Steckeradapters mit darin verlaufendem Fluidzweigkanal aus dem Detail XIX aus Figur 16.

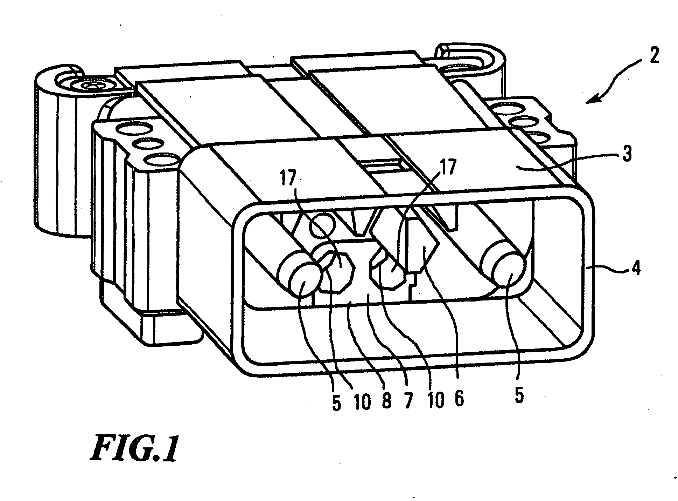

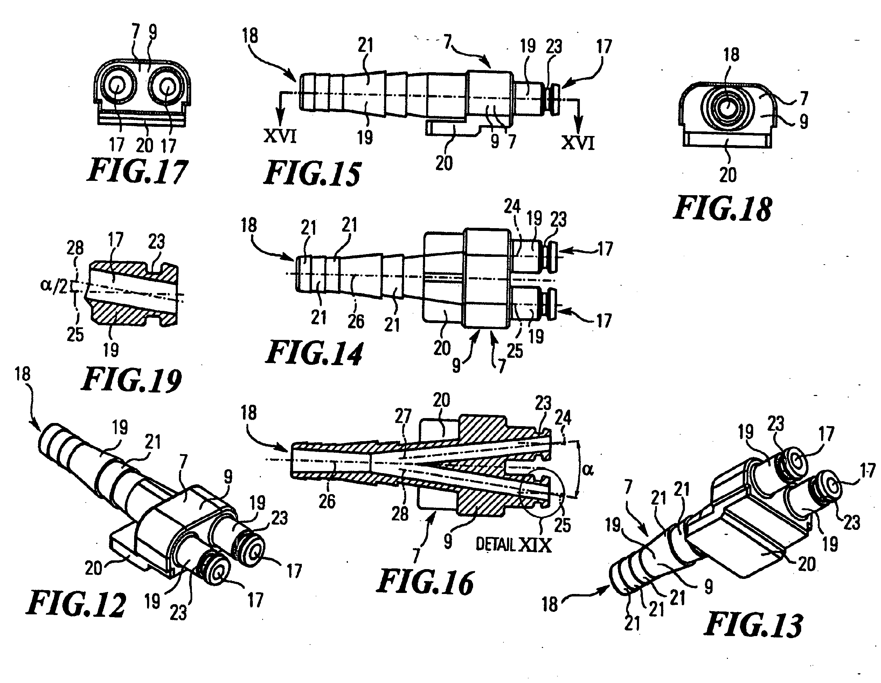

In Figur 1 ist ein Bestandteil eines Ladesteckverbinders 1, nämlich die Dose 2, mit einem Dosengehäuse 3 dargestellt. Das Dosengehäuse weist eine Schürze 4 auf, welche zwei stromführende Kontakte 5 umgibt. Zwischen den Stiftkontakten 5, leicht nach oben versetzt, ist ein Codierstift 6 vorgesehen. Der Codierstift 6 weist eine fünfeckige Form auf. Diese fünfeckige Form kommt dadurch zu Stande, dass ein Codierstift mit einer sechseckigen Form in der Mitte geteilt wurde. Die Stiftkontakte 5 stehen nicht über die Schürze 4 hinaus. Die Schürze 4 umgibt die Stiftkontakte komplett entlang ihres Umfanges. Unterhalb einer Ebene durch die Stiftkontakte 5 ist ein Adapter 7 in das Dosengehäuse 3 eingesteckt. In den Aufnahmeadapter 8 wird ein Steckadapter 9, wie er in Figur 13 dargestellt ist, eingesteckt. Am Ende der Dose weist der Aufnahmeadapter zwei runde Fluidhauptkanäle auf. Das Ende des Aufnahmeadapters 8 ist in das Innere der Dose 2 vom Dosengehäuse 3, insbesondere vom Ende der Schürze 4 versetzt. Die Querschnitte der runden Fluidzweigkanäle sind gleich groß. Im Inneren der Fluidzweigkanäle ist jeweils eine ringförmige Vertiefung 10 eingearbeitet.

In allen Figuren werden für dieselben Bauteile die selben Bezugszeichen verwendet.

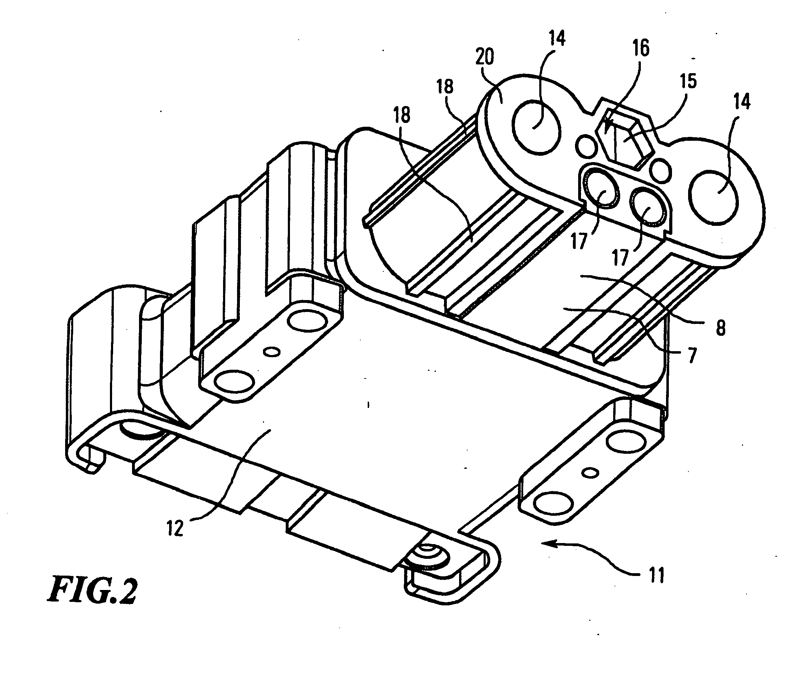

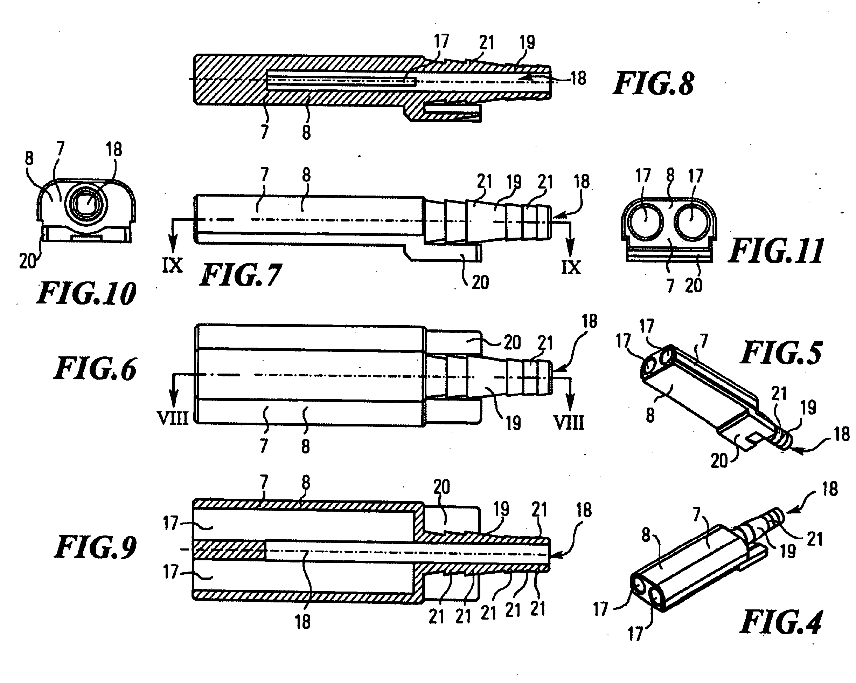

In Figur 2 ist ein weiteres Bauteil eines Ladesteckverbindersatzes 1, und zwar der Stecker 11 dargestellt. Der Stecker 11 weist ein Steckgehäuse 12 auf, wobei ein Teil des Steckgehäuses 12 als Steckvorsprung 13 ausgebildet ist. In dem Steckvorsprung 13 sind parallel zur Längsachse des Steckers 11 Stiftkontaktaufnahmeausnehmungen 14 vorgesehen. Oberhalb einer Ebene durch die Stiftkontaktaufnahmeausnehmungen 14 ist ein Codierstift 15 in einer Codierstiftaufnahme 16 vorgesehen. In die Codierstiftaufnahme 16 werden neben dem Codierstift 15 des Steckers 11 im zusammengesetzten Zustand von Dose 2 und Stecker 11, auch der Codierstift 6 der Dose 2 eingesetzt. Sind die zwei Codierstifte 6 und 16 entsprechend gegengleich zueinander ausgerichtet, so ist ein Zusammenstecken von Dose 2 und Stecker 11 möglich. Ist einer der zwei Codierstifte 6 oder 15 verdreht, so ist ein Zusammenstecken von Dose 2 und Stecker 11 nicht möglich. Unterhalb einer Mittelebene durch die Stiftkontaktausnehmungen 14 ist ein Adapter 7, nämlich ein Aufnahmeadapter 8 vorgesehen. Dieser Aufnahmeadapter 8 hat an seinen Enden, mit dem Ende des Steckvorsprunges 13 fluchtend, Fluidzweigkanäle 17 ausgebildet. Im Inneren des Fluidzweigkanales 17 verläuft der Fluidhauptkanal 18. Der Fluidhauptkanal 18 ist besonders gut in den Figuren 8, 9 und 16 zu sehen.

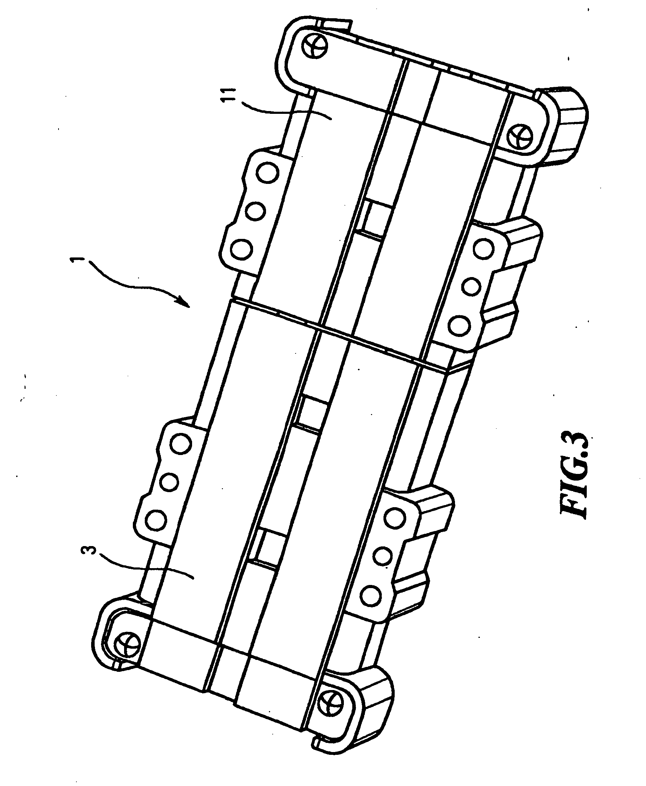

In Figur 3 ist der zusammengesteckte Zustand von dem Ladesteckverbindersatzes bestehend aus Dose 2 und Stecker 11 mit darin integrierten Adaptern 7 dargestellt.

In der Figur 4 ist ein Steckadapter 9 dargestellt. Die Fluidzweigkanäle 17 beginnen an einem Ende des Aufnahmeadapters 8. Im Inneren des Aufnahmeadapters 8 münden die Fluidzweigkanäle 17 in den Fluidhauptkanal 18. Der Fluidhauptkanal 18 endet in einem Steckvorsprung 19. Auf der Unterseite des Aufnahmeadapters 8 ist eine axiale Befestigungslasche 20 ausgebildet. Die axiale Befestigungslasche 20 gerät in bündigen Kontakt mit dem Dosengehäuse 3 oder dem Steckergehäuse 12.

In Figur 5 ist ein Adapter 7, und zwar der Aufnahmeadapter 8 aus Figur 4 dargestellt. Auf der Außenseite des Steckvorsprunges 19 sind Rückhaltevorsprünge 21 vorgesehen. Die Rückhaltevorsprünge 21 werden durch außen eingearbeitete Riefen erzeugt. Die Rückhaltevorsprünge 21 sind konisch ausgebildet. Dies ist auch besonders gut in den Figuren 6, 7, 8 und 9 zu sehen.

In Figur 6 ist die Oberflächenform des Aufnahmeadapters 8 mit über den Hauptbereich des Aufnahmeadapters hinausragender Befestigungslasche 20 ausgebildet. Der Steckvorsprung 19 ragt allerdings in Längsrichtung des Adapters über die Befestigungslasche 20 hinaus.

In Figur 7 ist dargestellt, dass sich die Befestigungslasche 20 unterhalb des Steckvorsprunges 19 in Richtung des Endes des Fluidhauptkanales, fern von der Mitte des Aufnahmeadapters 8 hinerstreckt. Der Steckvorsprung 19 ist von der Befestigungslasche 20 beabstandet.

In Figur 8 ist ein Verbindungsbereich 22 zwischen dem Fluidzweigkanal 17 und dem Fluidhauptkanal 18 dargestellt.

In Figur 9 ist auch dargestellt, dass der Verbindungsbereich 22 beide Fluidzweigkanäle 17 mit dem Fluidhauptkanal 18 verbindet.

Durch ein Vergleich der Durchmesser der Fluidhauptzweigkanäle 17 mit dem Fluidhauptkanal 18 aus den Figuren 11 und 10 wird klar, dass der Fluidhauptkanal 18 einen kleineren Durchmesser als die Fluidzweigkanäle 17 des Aufnahmeadapters 8 haben. Bei dem Steckadapter 9, wie er in den Figuren 12 bis 19 dargestellt ist, ist dies nicht der Fall, da dort der Durchmesser der Fluidzweigkanäle 17 kleiner ist als der Durchmesser des Fluidhauptkanals 18. Die Außenabmessungen im Bezug auf Länge und Breite der zwei Adapter 7 sind jedoch gleich.

In Figur 12 ist ein Adapter 7 dargestellt. Der Adapter 7 in Figur 12 ist ein Steckadapter 9. Der Steckadapter 9 hat zwei Fluidzweigkanäle 17 und einen Fluidhauptkanal 18. Die Fluidzweigkanäle 17 verlaufen in Steckvorsprüngen 19. Die Steckvorsprünge 19 weisen radiale Nuten 23 auf.

In die Nuten 23 können Dichtungsringe eingesetzt werden. Der Fluidhauptkanal 18 verläuft in einem Steckvorsprung 19, welcher konische Rückhaltevorsprünge 21 aufweist unterhalb einer Ebene durch die Fluidzweigkanäle 17 und den Fluidhauptkanal 18 ist, und parallel zu der Ebene, gebildet durch eine Befestigungslasche 20, ist. Diese Befestigungslasche 20 gerät in eingreifenden Kontakt mit dem Dosengehäuse 3 oder dem Steckgehäuse 12. In Figur 13 ist auch ein Absatz der Befestigungslasche 20 dargestellt.

In Figur 14 sind die Mittelachsen 24 und 25 der Steckvorsprünge 19, in denen die Fluidzweigkanäle 17 verlaufen, parallel zueinander dargestellt. Die Mittelachsen 24 und 25 verlaufen parallel zu einer Mittelachse 26 des Steckvorsprunges 19 in dem der Fluidhauptkanal 18 verläuft.

Die Mittelachse 26 des Fluidhauptkanales 18 ist zugleich die Mittelachse des Steckvorsprunges 19 des Fluidhauptkanales 18.

Die Figur 16 zeigt den Versatz und den Winkel α der Mittelachsen 27 und 28 durch die Fluidzweigkanäle 17 zueinander. Die Mittelachsen 27 und 28 treffen sich in einem gemeinsamen Punkt in der Mittelachse 26. Die Mittelachsen 24 und 25 durch die Steckvorsprünge 19, in denen die Fluidzweigkanäle 17 verlaufen, sind parallel zu dem Fluidhauptkanal 18 insbesondere zu der Mittelachse 26 des Fluidhauptkanales 18 und parallel zu der Mittelachse 26 des Steckvorsprunges 19 in dem der Fluidhauptkanal 18 verläuft. Die Fluidzweigkanäle 17 sind gerade ausgestaltet. Auch der Fluidhauptkanal 18 ist gerade ausgestaltet. Es lässt sich ein definierter Übergangsbereich der Fluidzweigkanäle 17 in den Fluidhauptkanal 18 erreichen. Besonders hilfreich ist hierbei das anzuwendende Verfahren eines Spritzgussverfahrens.

In Figur 15 sind besonders gut die Nuten 23 und die Rückhaltevorsprünge 21 dargestellt.

In der Figur 17 sind die parallel zueinander angeordneten Fluidzweigkanäle 17 dargestellt. Symmetrisch zwischen den beiden Fluidzweigkanälen 17 verläuft der Fluidhauptkanal 18, sowie er auch in Figur 18 dargestellt ist.

In Figur 19 ist der schräg angeordnete Fluidzweigkanal 17 in Bezug auf die Mittelachse 25 durch den Steckvorsprung 19, in dem der Fluidzweigkanal 17 verläuft, dargestellt. Auch die radiale Nut 23, radial angebracht auf der Außenseite, des Steckvorsprunges 19 ist dargestellt. Zwischen der Mittelachse 28 und der Mittelachse 25 bildet sich der Winkel α/2. Als besonders vorteilhaft für den Winkel α hat sich der Wert von 15° herauskristallisiert.

Im Folgenden wird die Funktions- und Wirkungsweise der Erfindung näher beschrieben.

Ein Adapter 7, und zwar entweder ein Aufnahmeadapter 8 oder ein Steckadapter 9 werden in das Dosengehäuse 3 oder in das Steckgehäuse 12 eingesetzt. Dabei wird jeweils ein Aufnahmeadapter 8 und ein Steckadapter 9 in je einen Bestandteil des Ladesteckverbindersatzes 1 und zwar in die Dose 2 und den Stecker 11 eingesetzt. Werden Stecker 11 und Dose 2 zusammengesteckt, so geraten die Stiftkontakte 5 in die Stiftkontaktaufnahmeausnehmungen 14 und ermöglichen eine Stromübertragung. Dabei werden hohe Ströme übertragen. Gleichzeitig geraten die Steckvorsprünge 19, welche die Fluidzweigkanäle 17 beherbergen in gesteckten Kontakt in die Fluidzweigkanäle 17 des Aufnahmeadapters 8. Zwischen dem Aufnahmeadapter 8 und dem Steckadapter 9 entsteht somit eine fluiddichte Kupplung. Fluid gelangt in der Folge von dem Aufnahmeadapter 8 durch den Fluidhauptkanal 18 und die Fluidzweigkanäle 17 des Aufnahmeadapters 8 in die Fluidzweigkanäle 17 und danach in den Fluidhauptkanal 18 des Steckadapters 9 oder umgekehrt.

## Patentansprüche

1. Ladesteckverbindersatz (1) mit einem ein Steckgehäuse (12) aufweisenden Stecker (11) und einer ein Dosengehäuse (3) aufweisenden Dose (2) zum Übertragen von elektrischen Strömen und Fluiden etwa für einen Gabelstapler, wobei wechselseitig zueinander passend an dem Stecker (11), der Dose (2) zugewandt und an der Dose (2) dem Stecker (11) zugewandt, je ein Steckadapter (9) oder ein Aufnahmeadapter (8) in Längsrichtung von Stecker (11) und Dose (2) einsetzbar und lösbar vorgesehen ist, wobei in den Adapter (7) jeweils ein Fluidhauptkanal (18) und in diesen mündende Fluidzweigkanäle (17) derart verlaufen, dass die an der Außenseite des Steckadapters (9) befindlichen Enden der Fluidzweigkanäle (17) als hohle Steckvorsprünge (19) ausgestaltet sind, die in die Fluidzweigkanäle (17) des Aufnahmeadapters (9) unter Herstellung einer fluiddichten Verbindung im eingesteckten Zustand von Stecker (11) und Dose (2) eingesteckt sind, und dass die Mittelachsen (24 und 25) durch die Außenkonturen der Steckvorsprünge (19) parallel zueinander verlaufen,
**dadurch gekennzeichnet, dass** die steckadapterseitigen Fluidzweigkanäle (17) gerade verlaufen und deren Mittelachsen (27 und 28) sich mit der Mittelachse (26) des Fluidhauptkanales (18) schneiden.

2. Ladesteckverbindersatz (1) nach Anspruch 1, **dadurch gekennzeichnet, dass** sich die Mittelachsen (27) und (28) der Fluidzweigkanäle (17) in einem Punkt auf der Mittelachse (26) des Fluidhauptkanales (18) schneiden.

3. Ladesteckverbindersatz (1) nach Anspruch 1 oder 2, **dadurch gekennzeichnet, dass** zumindest einer der Adapter (7) spritzgusstechnisch hergestellt ist.

4. Ladesteckverbindersatz (1) nach zumindest einem der Ansprüche 1 bis 3, **dadurch gekennzeichnet, dass** die Mittelachsen (27 und 28) der Fluidzweigkanäle (17) um 45° bis 5° zueinander versetzt sind.

5. Ladesteckverbindersatz (1) nach zumindest einem der Ansprüche 1 bis 4, **dadurch gekennzeichnet, dass** die Mittelachsen (27 und 28) der Fluidzweigkanäle (17) vorzugsweise um 15° zueinander versetzt sind.

6. Ladesteckverbindersatz (1) nach zumindest einem der Ansprüche 1 bis 4, **dadurch gekennzeichnet, dass** der Fluidhauptkanal ,(18) in einem Steckvorsprung (19) endet.

7. Ladesteckverbindersatz (1) nach zumindest einem der Ansprüche 1 bis 4, **dadurch gekennzeichnet, dass** der Fluidhauptkanal (18) einen größeren Durchmesser als einer der Fluidzweigkanäle (17) aufweist.

8. Ladesteckverbindersatz (1) nach zumindest einem der Ansprüche 1 bis 4, **dadurch gekennzeichnet, dass** die Durchmesser der Fluidzweigkanäle (17) gleich groß sind.

9. Ladesteckverbindersatz (1) nach zumindest einem der Ansprüche 1 bis 4, **dadurch gekennzeichnet, dass** das zumindest einer der Steckvorsprünge (19) radiale Rückhaltevorsprünge (21) aufweist.

10. Ladesteckverbindersatz (1) nach zumindest einem der Ansprüche 1 bis 4, **dadurch gekennzeichnet, dass** zu mindestens einer der Steckvorsprünge (19), vorzugsweise die beiden Steckvorsprünge (19), in dem oder in denen die Fluidzweigkanäle (17) enden, radiale Nuten (23) zur Aufnahme von Dichtringen aufweisen.

11. Ladesteckverbindersatz (1) nach zumindest einen der Ansprüche 1 bis 4, **dadurch gekennzeichnet, dass** der Adapter (7) zu einer Ebene durch die Längsachse des Adapters (7) symmetrisch aufgebaut ist.

12. Ladesteckverbindersatz (1) nach zumindest einen der Ansprüche 1 bis 4, **dadurch gekennzeichnet, dass** der Adapter eine axial abstehende Befestigungslasche (20) aufweist.

## Claims

1. Charging plug-type connector set (1) with a plug (11) having a plug-type housing (12) and a socket (2) having a socket-type housing (3) for transmitting electrical currents and fluids for example for a forklift truck, in each case a plug-type adaptor (9) or a receiving adaptor (8) being capable of being inserted and being provided detachably in the longitudinal direction of the plug (11) and socket (2) so as to fit one another on the plug (11), facing the socket (2), and on the socket (2), facing the plug (11), in each case one fluid main channel (18) and fluid branch channels (17) opening out into said fluid main channel running into the adaptor (7) in such a way that those ends of the fluid branch channels (17) which are located on the outside of the plug-type adaptor (9) are in the form of hollow plug-type projections (19), which are plugged into the fluid branch channels (17) of the receiving adaptor (9) so as to produce a fluid-tight connection in the plugged-in state of the plug (11) and the socket (2), and that the mid-axes (24 and 25) run parallel to one another through the outer contours of the plug-type projections (19), **characterized in that** the fluid branch channel (17) on the plug-type adaptor side run in a straight line and the mid-axes (27 and 28) thereof intersect one another with the mid-axis (26) of the fluid main channel (18).

2. Charging plug-type connector set (1) according to Claim 1, **characterized in that** the mid-axes (27) and (28) of the fluid branch channels (17) intersect one another at a point on the mid-axis (26) of the fluid main channel (18).

3. Charging plug-type connector set (1) according to Claim 1 or 2, **characterized in that** at least one of the adaptors (7) is produced using injection-moulding technology.

4. Charging plug-type connector set (1) according to at least one of Claims 1 to 3, **characterized in that** the mid-axes (27 and 28) of the fluid branch channels (17) are offset with respect to one another through from 45° to 5°.

5. Charging plug-type connector set (1) according to at least one of Claims 1 to 4, **characterized in that** the mid-axes (27 and 28) of the fluid branch channels (17) are preferably offset with respect to one another through 15°.

6. Charging plug-type connector set (1) according to at least one of Claims 1 to 4, **characterized in that** the fluid main channel (18) ends in a plug-type projection (19).

7. Charging plug-type connector set (1) according to at least one of Claims 1 to 4, **characterized in that** the fluid main channel (18) has a greater diameter than one of the fluid branch channels (17).

8. Charging plug-type connector set (1) according to at least one of Claims 1 to 4, **characterized in that** the diameters of the fluid branch channels (17) are equal in size.

9. Charging plug-type connector set (1) according to at least one of Claims 1 to 4, **characterized in that** the at least one of the plug-type projections (19) has radial retaining projections (21).

10. Charging plug-type connector set (1) according to at least one of Claims 1 to 4, **characterized in that** at least one of the plug-type projections (19), preferably the two plug-type projections (19), in which projection or projections the fluid branch channels (17) end, has/have radial grooves (23) for receiving sealing rings.

11. Charging plug-type connector set (1) according to at least one of Claims 1 to 4, **characterized in that** the adaptor (7) is constructed so as to be symmetrical with respect to a plane through the longitudinal axis of the adaptor (7).

12. Charging plug-type connector set (1) according to at least one of Claims 1 to 4, **characterized in that** the adaptor has an axially protruding fastening lug (20).

## Revendications

1. Dispositif de connexion (1) pour la charge, comportant un connecteur (11) ayant un boîtier de connecteur (12) et une prise (2) ayant un boîtier de prise (3) pour le passage de courants électriques et de fluides, par exemple un chariot élévateur, selon lequel
alternativement, de façon respectivement adaptée, le connecteur (11) du côté tourné vers la prise (2) et la prise (2) du côté tourné vers le connecteur (11), comportent respectivement un adaptateur de connecteur (9) ou un adaptateur de prise (8) qui se placent dans la direction longitudinale du connecteur (11) et de la prise (2) et peuvent être détachés,
l'adaptateur (7) a un canal principal de fluide (18) et des canaux de dérivation de fluide (17) débouchant dans celui-ci de façon que les extrémités des canaux de dérivation de fluide (17) qui se trouvent sur le côté extérieur de l'adaptateur de connecteur (9) soient réalisées sous la forme de parties de connexion (19) en saillie, creuses, qui peuvent s'emmancher dans les canaux de dérivation de fluide (17) de l'adaptateur de prise (9) pour réaliser une liaison étanche au fluide lorsque le connecteur (11) et la prise (2) sont enfichés, et
les axes (24, 25) sont parallèles dans les contours extérieurs des parties de connexion (19) en saillie,
**caractérisé en ce que**
les canaux de dérivation de fluide (17) du côté de l'adaptateur de connecteur sont droits et leurs axes médians (27, 28) se coupent sur l'axe médian (26) du canal principal de fluide (18).

2. Dispositif de connexion (1) pour la charge selon la revendication 1,
**caractérisé en ce que**
les axes (27, 28) des canaux de dérivation de fluide (17) se coupent en un point de l'axe (26) du canal principal de fluide (18).

3. Dispositif de connexion (1) pour la charge selon la revendication 1 ou 2,
**caractérisé en ce qu'**
au moins l'un des adaptateurs (7) est réalisé par injection.

4. Dispositif de connexion (1) pour la charge selon les revendications 1 à 3,
**caractérisé en ce que**
les axes (27, 28) des canaux de dérivation de fluide (17) sont décalés l'un par rapport à l'autre d'un angle compris entre 45° et 5°.

5. Dispositif de connexion (1) pour la charge selon les revendications 1 à 4,
**caractérisé en ce que**
les axes (27, 28) des canaux de dérivation de fluide (17) sont décalés l'un par rapport à l'autre de préférence de 15°.

6. Dispositif de connexion (1) pour la charge selon les revendications 1 à 4,
**caractérisé en ce que**
le canal principal de fluide (18) se termine dans une partie de connexion (19) en saillie.

7. Dispositif de connexion (1) pour la charge selon les revendications 1 à 4,
**caractérisé en ce que**
le canal principal de fluide (18) a un diamètre plus grand que l'un des canaux de dérivation de fluide (17).

8. Dispositif de connexion (1) pour la charge selon les revendications 1 à 4,
**caractérisé en ce que**
les diamètres des canaux de dérivation de fluide (17) ont la même dimension.

9. Dispositif de connexion (1) pour la charge selon les revendications 1 à 4,
**caractérisé en ce qu'**
au moins l'une des parties de connexion (19) en saillie comporte des organes de retenue (21) en saillie, dirigés radialement.

10. Dispositif de connexion (1) pour la charge selon les revendications 1 à 4,
**caractérisé en ce qu'**
au moins l'une des parties de connexion (19) en saillie et de préférence les deux parties de connexion (19) en saillie dans laquelle ou dans lesquelles se terminent les canaux de dérivation de fluide (17) comportent des gorges radiales (23) pour recevoir des joints d'étanchéité toriques.

11. Dispositif de connexion (1) pour la charge selon les revendications 1 à 4,
**caractérisé en ce que**
l'adaptateur (7) est de construction symétrique par rapport à un plan passant par son axe longitudinal.

12. Dispositif de connexion (1) pour la charge selon les revendications 1 à 4,
**caractérisé en ce que**
l'adaptateur comporte une patte de fixation (20) venant axialement en saillie.
